# EUROPEAN PATENT APPLICATION

(11) **EP 0 871 098 A1**
(43) Date of publication of application: **14.10.1998**
(21) Application number: 97830106.7
(22) Date of filing: 11.03.1997
(51) Int. Cl.: G05B 19/08

(54) **Technique for automation and control of operative units**

(71) Applicant: SINCROTRONE TRIESTE Societa Consortile per Azioni, I-34012 Trieste (IT)
(72) Inventor: Tosolini, Piergiorgio, 34015 Muggia (TS) (IT)

(57) **Abstract**

The invention regards a technique of automation and control for the formation of systems of operative units having coordinated functions by means of their simple interconnection.

Said invention makes use of pre-existing control, signaling and actuator circuits seated in the units (102, 103, 104) and is carried out by means of the creation of a chain of electric connections that is galvanically separated from the operative circuits of the units (102, 103, 104); the chain begins with a suitably cabled blind connector called starting plug (101), continues along the units (102, 103, 104) to be coordinated by sections of parallel wires (1, 2, 3,..., 20) and terminates with another suitably cabled blind connector called the ending plug (105) thus forming electric circuits within the chain where the units (102, 103, 104) deposit signals and draw the global results on the basis of standards of known electric circuitry for automation.

The units (102, 103, 104) call for the modification of their internal cables and the installation of one or more connectors specifically for the chain.

## Description

### Technical field

The invention hereof concerns a technique of automation and control for the creation of systems of coordinated-function operative units such as industrial production lines and complex scientific experiments.

### Background art

The practice of interconnecting the various operative units of a working system - such as electrical, hydraulic, pneumatic and mechanical equipment, etc. - in order to coordinate the operations of each unit is well known. A number of more or less complex techniques - where information is distributed by electrical, mechanical, pneumatic, optical, or other means - have been devised. Some of this information is fundamental (for example starting, switching off, emergency) and is found in practically all types of systems, whereas other information regards functions that are specifically for the particular type of system.

The configurations that the different techniques require for the interconnection between the various units are also known. The name of each configuration recalls the macroscopic aspect of its connections. For example, a centralized control technique with a star configuration implies the individual connection of each single unit to the central control unit. A full mesh configuration requires each unit to be connected to all of the others. In a ring configuration, each unit is connected to the preceding and subsequent unit forming a closed ring. A chain configuration begins with the connection of the first unit to the second and goes on with the connection of the second unit to the third and so on until the last unit is reached and the chain ends without linking up to the first unit.

Each technique establishes a ratio between the advantages offered (quantity and quality of information exchanged, practicality of installation and use, possibility of expansion and modification, etc.) and the effort required for its realization (know-how required, time, costs, dimensions, consumption, complexity, availability of material, etc.) which fall under the safety and reliability specifications and the standards that apply to the system. Often the simplest, safest and most economical techniques (fixed logic) offer limited scope for modification and expansion as they require the intervention of specialized personnel on the component parts of the logic employed. The greater flexibility more sophisticated techniques offer (programmed logic, such as PLCs) call for greater efforts for realization and are not always as reliable and sturdy as the previously mentioned logic: even in this case specialized personnel is required to intervene on the programmes that set up the logic.

### Disclosure of invention

The objective of the invention hereof is to offer users a new technique of automation and control able to confer some of the typical advantages of the most sophisticated techniques and at the same time preserve the qualities of practicality, inexpensiveness and reliability granted by simpler technical levels.

The technique in question foresees the distribution of information by means of electric signals and the preferred configuration for the interconnection of the units is of chain type; this technique allows for the minimization of both the work required to prearrange the units to be coordinated as well as the number of components required for interconnection. In fact, the prearrangement of each unit becomes nothing but the modification of the internal cables and the installation of a pair of connectors (one inlet and one outlet connector) specifically for the chain, by means of which the signals enter the unit, interact sharing the information and then leave, to advance along the chain. Therefore, the units can be prearranged without having to worry about additional components in the case of future expansion. As far as the interconnections are concerned, clusters of parallel conductors are used: a multicore cable generally connects each unit to the next. The position of a unit in the chain makes no difference; in fact, the chain draws the signals from all the units on its outward journey and distributes the results along its return.

The task of starting and ending the chain is entrusted to two blind connectors that are adequately cabled and called the starting plug and ending plug, placed in correspondence with the inlet connector of the first unit and the outlet connector of the last unit respectively.

Potential electrical conflict due to the interconnections is avoided by galvanically separating the circuits in charge of the operations from those that share the signals in each unit: whereas the former are powered locally depending on the requirements of each single unit, thanks to the interconnections, those that share the signals form a single chain of electric circuits that cross the units with continuity, with the advantage of keeping the exchange of information simple and reliable. Thanks to the plugs, within said chains, electric circuits in which each unit deposits its own contribution of information according to well known standards of automation are formed (series or parallel circuits, etc.) and the overall results of the entire chain are then collected. The separate power supply of the chain allows for functioning even while transiting through units that are switched off: all the controls - especially those of emergency stop - remain active, and, at most, the unpowered local operations come to a halt. A separate power supply specifically for the chain is required: it is incorporated in a unit that is therefore called an active unit; whatever its position, it supplies power to the entire chain.

The chain is also prearranged to host several active units without any conflict regarding their power supplies and respective galvanic references. In fact, in each active unit, instead of immediately going to the circuits that share the signals of the chain, the power supply is connected to two wires that are kept separate and known as the feed manifolds; only at the end, inside the ending plug are the manifolds linked to the rest of the chain, powering it. Said manifolds simply transit from the inlet connector to the outlet connector in units which do not have a power supply specifically for the chain, known as passive units, whereas in the case of the active units, the manifolds are discontinued at their corresponding inlet connector. Therefore, in each active unit the power of the chain deriving from the preceding unit is replaced with that of its own specific power supply. Thus, the last active unit of the sequence is the one that powers the chain. By forgoing some of the advantages, other methods can be chosen to power the chain. Power may be supplied to the chain by means of its entry through a plug or an interconnection, with or without manifolds, drawing input from power supplies external to the chain.

Signal sharing circuits referable to the same technique but having different macroscopic configurations may be realized without substantial modification to the electrical configuration of the internal circuits. In fact, along the chain some actuators can send their signals along branches of the chain itself; entire units may be placed on these branches following the same logic of circuit connections and eventually varying the number of specific connectors and/or wires. Similarly, different directions of flow of the signals and power supply may be chosen, for example by exchanging the roles of the plugs without implying a change in context of the technique in question.

Summarizing the advantages offered by this technique, the prearrangement of the unit allows for the creation of coordinated-function working systems by simply interconnecting said units and it is possible to vary the number and sequence of the units at any time and wherever necessary depending on production requirements; standstill periods are consequently reduced to the time required for the disconnection and reconnection of the units. Working personnel not specialized in the prearrangement can see to the reconfiguration of the working system autonomously by simply reconnecting the units in the new order. Local control of a dangerous work process, for example by means of a portable push-button panel, only requires the opening of the chain at any point, the insertion of the push-button panel and the relinking of the chain to restart work at a safe distance.

Any interconnection default (unplugged terminations, linking of the last unit with the first, the absence of an active unit in the chain, connection oversights, etc.) make it impossible to start the system; no operation can take place and work can start only once the necessary correction has been made.

Malfunctions of the chain, such as false contacts, cut cables, or earthing defects cause a break in power supply and make it consequently impossible to operate the system, switching off all the units with no danger for the user; however, a resetting operation is required. Most of the modifications made after the prearrangement of a unit, such as the insertion of new actuators regarding pre-existing functions, call for minimum modification of the internal cables of said unit, leaving the other units and interconnection cables invaried since the number of wires of the chain only depends on the number of independent functions that the units share. Furthermore, variations of the order of priority of different functions, such as the dependence of a starting to the consent of another switching on can be carried out by simple recabling inside the starting plug without involving the unit and the cables; the modification of the two latter components is required only in the case of substantial variation of the initial layout. An active unit may be used independently by removing it from the chain and ending the connections with plugs.

The length of the interconnections, the number of units, functions and relative actuators are virtually unlimited, the only limitations being practical ones due to the electric nature of the signals bearing the information.

### Brief description of the drawings

These and further characteristics and advantages of the invention in question will appear more clearly from the description of a preferred embodiment which is by no means the sole, illustrated for indicative and not restrictive purposes in the following figures in which:
- figure 1 shows a block diagram of the chain;
- figure 2 is a detailed diagram of the starting plug;
- figure 3 is a detailed diagram of an active unit with different functions, each of which depend on a single actuator;
- figure 4 is a detailed diagram of a passive unit: a push-button panel with only manual controls and light indicators with one actuator per function;
- figure 5 is a detailed diagram of an active unit in which several actuators apply to each function; for the sake of simplicity the ON/OFF function signal actuator contacts present in the unit in figure 3 have been omitted;
- figure 6 shows a detailed diagram of the ending plug.

### Mode for carrying out the invention

In greater detail, the working system described in the example hereof contains a chain of electrical interconnections formed by a starting plug 101, three operative units 102, 103 and 104, and an ending plug 105. Part of the electrical circuits present within each unit is specifically for the sharing of the signals of the chain, whereas the rest sees to the special operations of each unit and is powered locally and separately. For the sake of conciseness, this operative part has been omitted in the figures attached. Switching on, switching off and relative signals regarding three distinct operations, called operation 1, 2 and 3 - recognizable by the number following the name of the relative function - are shared by the entire system. In each unit 102, 103 and 104 two connectors have been installed specifically for signal sharing; with reference to the figures, the inlet connector is present on the left-hand side of each unit and the outlet connector is placed on the right. The internal cables of each unit send the signals related to the functions to be shared to said connectors.

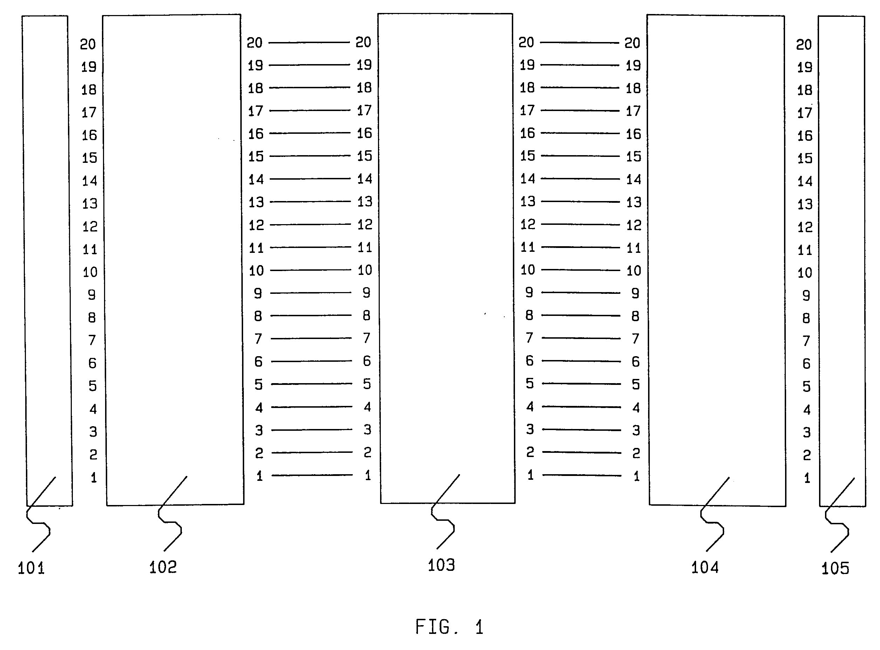

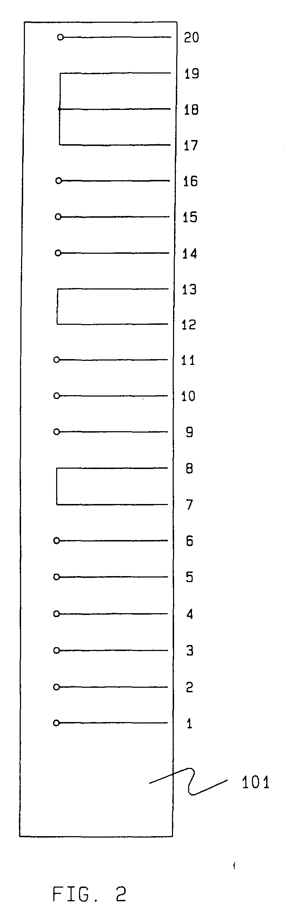

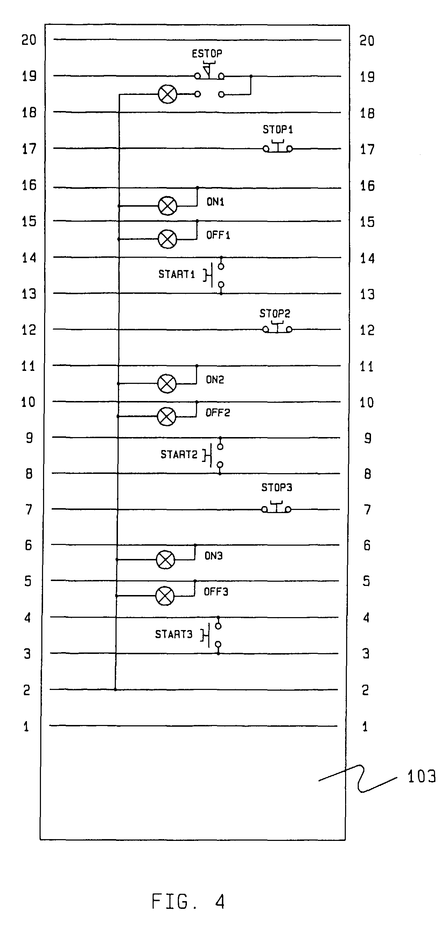

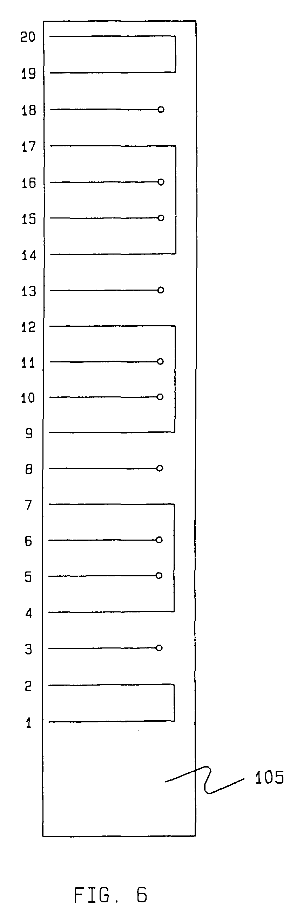

Figure 1 shows an overall diagram of the chain which begins with a blind connector that is suitably cabled and known as the starting plug 101, continues with the first unit 102, a section of a multicore cable, a second unit 103, another section of the multicore cable, a third unit 104 and eventually terminates with another suitably cabled blind connector called the ending plug 105. Signals travel along a cluster of twenty wires, numbered from 1 to 20 and therefore the multicore cables and relative connectors of said chain have twenty poles. To see a detailed diagram of the entire chain of which figure 1 is only a block diagram, place figures 2 to 6 side by side from left to right considering each figure connected to the next by a cluster of 20 parallel wires that connect the corresponding terminals.

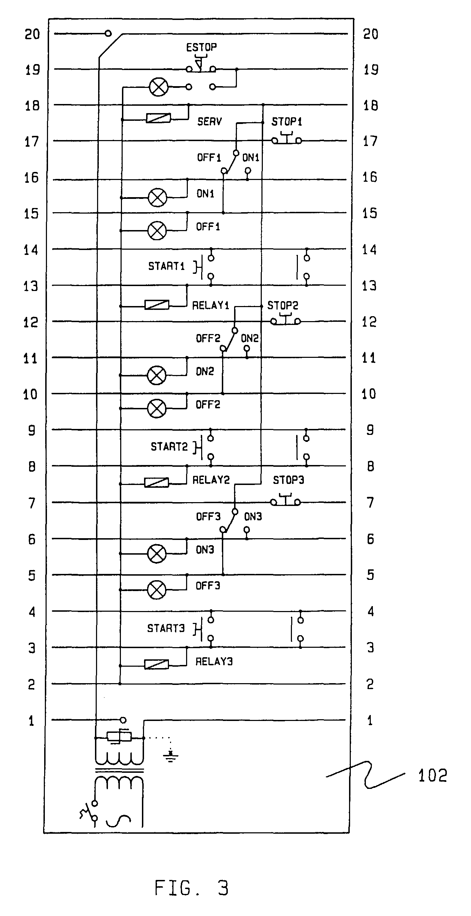

The signal path begins inside starting plug 101 with feed manifold 20 that emerges from said plug to enter unit 102. As this unit has its own power supply specifically for the chain (represented by the transformer shown at the bottom of figure 3), and is consequently defined as an active unit, it inputs this power into the manifold 20; therefore manifold 20 which derives from starting plug 101 is cut out at the inlet connector of said unit 102 and continues with the input deriving from the above mentioned power supply.

Manifold 20 therefore leaves unit 102 to enter the next unit 103 which does not have its own power supply specifically for the chain and is consequently defined as a passive unit; manifold 20 simply transits through it towards the next unit 104.

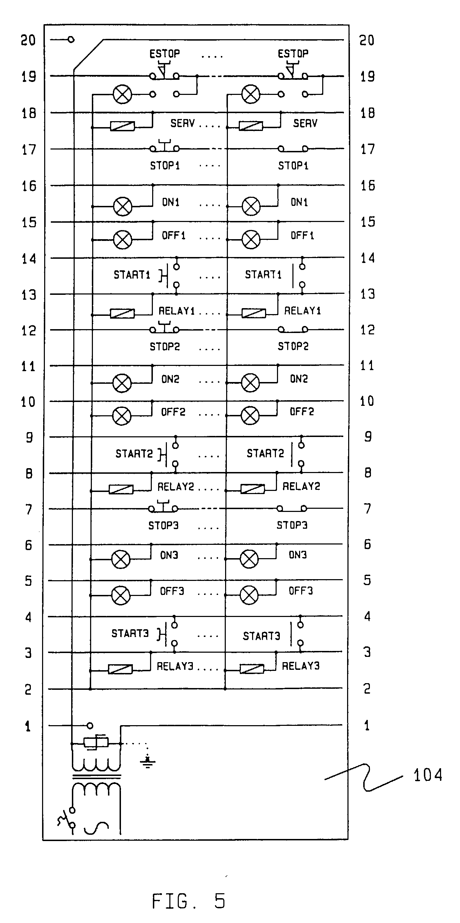

The power input in unit 104, deriving from unit 102 and transiting through unit 103 is abandoned and replaced by the power that comes from its own power supply specifically for the chain (represented by the transformer shown at the bottom of figure 5) which is present even in this unit as it is an active unit.

Since unit 104 is the last active unit of the chain, its specific power supply reaches terminal 20 of the ending plug 105 and, by means of the jumper connection 20-19, is sent back towards the beginning of the chain to power it.

Signal line 19 of the emergency stops ESTOP - which if activated have the function of shutting down all the operations of the system - starts with terminal 19 of the ending plug. In fact, reascending in the direction of the starting plug, there are a series of ESTOP commands along signal line 19 formed by retention emergency mushroom-head push buttons in the example hereof. A local light indicator shows which ESTOP has been pressed and has shut down the entire system.

If and only if none of the ESTOP buttons have been activated, power reaches terminal 19 of the starting plug where a jumper connects it to line 18 that distributes the consent to switch on and provide the general services along the entire chain (symbolized by the SERV actuators). These general services consist of all the equipment present in units 102, 103 and 104 that are to be switched on before starting the operations (except in the case of emergency) - such as the instrumentation, lighting, calculation and communication services, auxiliary services, etc.

Inside the starting plug, jumper 18-17 starts the STOP1 line which collects the series of stop operation 1 commands along wire 17 of the chain. The activation of one or more of these prevents the STOP1 line from reaching terminal 17 of the ending plug 105 due to the lack of power supply and switches off all the RELAY1 actuators related to operation 1 along the line, preventing any simultaneous switch on. At terminal 17 of ending plug 105 power is present only if consent for the execution of operation 1 is granted by the entire chain; this consent is sent back along the entire chain on wire 14 by means of jumper 17-14 inside the ending plug 105. At this point it is sufficient to activate any START 1 command present in units 102, 103 and 104 for power to reach wire 13, switching on all the RELAY1 actuators and thus carrying out operation 1. In the case of operations that once started must continue to operate even after the relative START command has been cleared, a self-retaining contact in parallel to the corresponding START maintains the order until the next stop command.

The execution status of operation 1 is signalled along the entire chain by means of the power or lack of power to OFF1 line, wire 15, ON1 line and wire 16, by means of actuator contacts OFF1 and ON1 shown only on unit 2 in the example hereof. If these contacts are operated by the actuator which truly carries out operation 1, the OFF1 and ON1 signals are not just an indication of the control of operation 1 but its effective execution; the operator therefore realizes if there are missing, partial or delayed executions depending on if the OFF1 indicator switches off and the ON 1 command lights up immediately after the operation command is given. The separation of signalling lines OFF1 and ON1 from their respective commands allows for the carrying out of the so-called "lamp test" function, which consists of the temporary switching on of all the light indicators to check functioning without affecting system status.

Wire 2 is the common return of the power of the chain; jumper 2-1 inside ending plug 105 connects it to manifold 1. Power reascends the chain uninterruptedly until it reaches unit 104 where even manifold 20 is powered by the last active unit of the chain.

The circuits that carry out the functions related to operations 2 and 3 are the same as those seen in the case of operation 1, save for the use of their own wires: from 8-12 for operation 2 and from 3-8 for operation 3, whereas only manifolds 1 and 20 and wires 2, 18 and 19 , i.e. the common return, SERV and ESTOP lines respectively are common to the functions of all the operations.

An order of priority of execution of the operations has been established in the given example, deciding - by means of suitable jumpers placed inside starting plug 101 - the terminal where the beginning of the STOP lines of the various operations are to get their power from. Jumper 18-17, taking the power for the STOP1 line from the SERV line, establishes that the execution of operation 1 is subject to prior consent deriving from the switching on of the general services SERV. Furthermore, the switching off of the general services SERV implies the immediate halt of operation 1. After restarting the general services SERV, operation 1 must be restarted singly.

With jumper 13-12 the power supply of the STOP2 line is taken from the line of RELAY1 actuators, which control operation 1. Therefore, it is not possible to start operation 2 if operation 1 has not been previously started and is not in action; further, the stopping of operation 1 causes the immediate arrest of operation 2, whereas after the restart of operation 1 operation 2 must be restarted individually. Switching off the general services SERV stops both operations.

Similarly, jumper 8-7, which draws the power for the STOP3 line from that of RELAY2, subjects the execution of operation 3 to the prior execution of operation 2 which in turn depends on operation1 and on SERV.

To change the order of priority it is sufficient to modify said jumpers inside the starting plug without any other modification of the units or their interconnecting cables.

## Claims

1. Technique for automation and control of operative units such as electrical, hydraulic, pneumatic, mechanical etc. equipment using pre-existing control, signaling, and actuator circuits seated inside the units (102, 103, 104) characterized by the fact that they are realized by means of the formation of a chain of electrical connections that is galvanically separated from the operative circuits of the units (102, 103, 104) and which begins with a suitably cabled blind connector called the starting plug (101), continues with the units (102, 103, 104) to be co-ordinated which are united by parallel wires (1, 2, 3,.., 20) and terminates with another suitably cabled blind connector known as the ending plug (105) thus forming electric circuits within the chain where the units (102, 103, 104) deposit signals and draw the global results on the basis of standards of known electric circuitry for automation; said units to be co-ordinated (102, 103, 104), are preset by means of the modification of the internal cables and the installation on each of them of one or more connectors specifically for the chain, allowing for the inlet, sharing and outlet of signals; said starting plug (101) contains the links between the wires (1, 2, 3,... , 20) for the formation of electric rings of signals; these links decide the order of priority between the various functions along the chain whereas the ending plug (105) contains the links of the signal rings as well as the links of those that draw the power supply of the whole chain from the manifold (1, 20), where manifold (1, 20) implies a pair of wires that are kept electrically separate from the other wires (2, 3, 4,.. ,19) of the chain; the said units (102, 104) in charge of powering the chain since they are provided with their own power supplies specifically for the chain, input these manifolds (1, 20) with power at the outlet connector, isolating the power deriving from the preceding unit by interrupting the manifolds (1, 20) at the inlet connector, whereas in the case of units (103) not liable for powering the chain, inasmuch as they lack a specific power supply, power deriving from the preceding unit (102) simply transits from the inlet connector to the outlet connector towards the next unit; the number of said wires (1, 2, 3,... ,20) of the chain depends on the number of independent functions that the units (102, 103, 104) share and not on the number of actuators that regard each single function; this is also because the units (102, 103, 104) within the same chain can share several distinct functions (START1, START2, START3, ON1, etc.) even related to different operations, reserving signal circuits formed by their own actuators, conductors and circuit links present inside the ending (105) and starting (101) plugs for each function and also because eventual consent and the order of priority between the various functions can be established by means of the internal cables of said starting plug (101).

2. Technique for automation and control of operative units according to claim 1, characterized by the fact that the chain may be formed even by a single unit (102 or 104) having a starting plug (101) and an ending plug (105) inserted respectively in the inlet and outlet connectors of said unit (102 or 104) as long as said unit (102 or 104) has its own power supply specifically for the chain.

3. Technique for automation and control of operative units according to claims 1 or 2, characterized by the fact that the chain may be powered by means of inlet through a starting plug (101), ending plug (105) or interconnection, with or without the presence of manifolds (1, 20), eventually drawing the input from power supplies external to the chain.

4. Technique for automation and control of operative units according to claims 1 to 3, characterized by the fact that along the chain some actuators can send their signals through branches of the chain or that entire units can be placed on said branches following the same logic of circuit connections with eventual variation of the number of specific connectors and/or wires (1, 2, 3,... , 20).

5. Technique for automation and control of operative units according to claims 1 to 4, characterized by the fact that circuits related to the same technique may be realized with the inverse direction of flow for signals and power supplies that are different from those described, for example by exchanging the roles of the starting (101) and ending plugs (105).

6. Technique for automation and control of operative units according to claims 1 to 5, characterized by the fact that the maximum number of units in a chain as well as the number of shared functions and their relative actuators is virtually unlimited, the only limitations being practical ones due to the electric nature of the signals bearing the information.
